Europäisches Patentamt

European Patent Office

Office européen des brevets

(19)

(11) Veröffentlichungsnummer: **0 163 022 B1**

(12) **EUROPÄISCHE PATENTSCHRIFT**

(45) Veröffentlichungstag der Patentschrift: 21.08.91

(51) Int. Cl.⁵: **G01D 5/26**, G01L 11/00, G01L 1/24

(21) Anmeldenummer: 85102911.6

(22) Anmeldetag: 14.03.85

(54) **Vorrichtung zur Messung des Linienintegrals einer örtlich veränderlichen Messgrösse.**

(30) Priorität: 30.05.84 DE 3420172

(43) Veröffentlichungstag der Anmeldung:
04.12.85 Patentblatt 85/49

(45) Bekanntmachung des Hinweises auf die
Patenterteilung:
21.08.91 Patentblatt 91/34

(84) Benannte Vertragsstaaten:
**DE FR GB**

(56) Entgegenhaltungen:
EP-A- 0 021 199      EP-A- 0 023 180
EP-A- 0 038 401      DE-A- 2 934 794
DE-A- 2 936 875      DE-A- 3 042 794
DE-A- 3 205 798

FUNKSCHAU Nr. 12, Juni 1984, Seiten 45-47,
München, DE; "Fühlen mit Licht"

(73) Patentinhaber: **Bodenseewerk Gerätetechnik
GmbH
Alte Nussdorfer Strasse 15 Postfach 1120
W-7770 Überlingen/Bodensee(DE)**

(72) Erfinder: **Bernard, Walter, Dr.
Allmendweg 6
W-7758 Meersburg(DE)**
Erfinder: **Dahl, Günter Walter, Dr.
Waldstrasse 20
W-7777 Salem(DE)**
Erfinder: **Kersten, Ralf Th., Dr.
Heidenhofstrasse 8
W-7800 Freiburg(DE)**

(74) Vertreter: **Weisse, Jürgen, Dipl.-Phys. et al
Patentanwälte Dipl.-Phys. Jürgen Weisse
Dipl.-Chem. Dr. Rudolf Wolgast Bökenbusch
41 Postfach 11 03 86
W-5620 Velbert 11 Langenberg(DE)**

## Beschreibung

Technisches Gebiet

Die Erfindung betrifft eine optische Faseranordnung zur Messung des Linienintegrals einer·räumlich veränderlichen ersten Meßgröße längs eines vorgegebenen Meßweges, bei welcher sich der Meßweg über einen Bereich erstreckt, in welchem Änderungen der ersten Meßgröße zu erwarten sind.

Zugrundeliegender Stand der Technik

Es ist bekannt, Lichtleitfasern als Sensorelemente für physikalische Meßgrößen wie Druck oder Temperatur zu verwenden ("Optical Fibre Sensors" First International Conference, 25-28. April 1983, IEE Conf. Publication No 221 London). Es geht dabei stets um die Erfassung örtlich konstanter Meßgrößen. Meist wird die Lichtleitfaser auf einen Träger aufgewickelt, der sich nach Maßgabe einer zu messenden Meßgröße verformt. Zur Messung von Flüssigkeitsschwankungen wird beispielsweise die Lichtleitfaser außen auf eine zylindrische Membran aufgewickelt, die innen von dem zu erfassenden Flüssigkeitsdruck beaufschlagt ist, so daß auf die Lichtleitfaser ein mechanischer Zug ausgeübt wird. Zur Messung eines Magnetfeldes wird die Lichtleitfaser in entsprechender Weise auf einen magnetostriktiven Zylinder aufgewickelt oder auf ein magnetostriktives Trägermaterial aufgeklebt. Es ist aber auch bekannt, daß eine einfache nackte Lichtleitfaser auf eine Druckänderung mit einer Phasenänderung des durch die Lichtleitfaser hindurchgehenden Lichts reagiert, wobei diese Phasenänderung proportional zu der Länge der Lichtleitfaser ist. Die Empfindlichkeit gegen Druckänderungen kann durch eine Ummantelung mit einem Material von höherer Kompressibilität als die des Fasermaterials wesentlich erhöht werden. Ebenso ist es bekannt, die Temperaturabhängigkeit der Brechzahl einer Lichtleitfaser und die thermische Ausdehnung der Lichtleitfaser für die Temperaturmessung auszunutzen.

Die durch die Meßgröße beeinflußte optische Eigenschaft ist meist die optische Weglänge der Lichtleitfaser, d.h. die Phase des von einem Laser durch die Lichtleitfaser geleiteten Lichtes. Die durch Änderungen der Meßgröße hervorgerufenen Phasenverschiebungen werden mittels eines Interferometers mit einer Referenz-Lichtleitfaser in Signale umgesetzt. Die Interferometer sind beispielsweise Mach-Zehnder-Interferometer.

Die ausgenutzte von der Meßgröße abhängige optische Eigenschaft der Lichtleitfaser kann aber auch die optische Doppelbrechung sein, durch welche der Polarisationszustand des durch die Lichtleitfaser geleiteten Lichts verändert wird.

Es ist weiterhin bekannt, mittels einer Schleife aus einer Lichtleitfaser das Magnetfeld eines elektrischen Stromes zu messen (EP-OS 23 180). Auch dort handelt es sich um die Erfassung einer örtlich konstanten Meßgröße.

Durch die DE-OS 2 934 794 ist ein mit Schleifen von Lichtleitfasern aufgebautes Gyroskop bekannt, durch welches Drehgeschwindigkeiten gegenüber dem inertialen Raum gemessen werden. Ein solches Gyroskop nutzt den Sagnac-Effekt aus. Bei einem geschlossenen Lichtweg ist im Falle einer Drehgeschwindigkeit im inertialen Raum die optische Weglänge für das "linksherum" laufende Licht verschieden von der optischen Weglänge für das "rechtsherum" laufende Licht. Aus der Phasendifferenz kann die Drehgeschwindigkeit bestimmt werden. Es werden dabei eine oder mehrere Schleifen der Lichtleitfaser gebildet, weil der Sagnac-Effekt proportional zu der von dem Lichtweg umschlossenen Fläche ist. Ähnliche Gyroskope sind auch in der eingangs erwähnten Literaturstelle "IEE Conf. Bulletin No. 221" beschrieben.

Durch die DE-A-3 042 794 ist ein Lichtleiterhydrophon zur Messung von akustischen Druckschwankungen in einer Flüssigkeit bekannt. Das Gerät enthält einen von kohärentem Licht durchstrahlten Lichtleiter in Form einer spiralförmig auf einem flachen Trägermaterial angeordneten Flachspule. Es wird die Phasenverschiebung des Lichtes nach Durchgang durch den Lichtleiter gemessen. Die Phasenverschiebung schwankt mit der Frequenz der Druckschwankungen. Das Lichtleiterhydrophon ist richtungsempfindlich. Wenn die Ebene der Flachspule unter einem Winkel zur Wellenfront der akustischen Welle angeordnet ist, dann treten die Druckschwankungen in den verschiedenen Teilen der Flachspule zu unterschiedlichen Zeiten auf. Die Phasenverschiebungen des Lichtes, die in den Teilen der Flachspulen durch die Druckschwankungen hervorgerufen werden, mitteln sich teilweise heraus. Die Amplitude der Schwankung der Phasenverschiebung des austretenden Lichtes wird ein Maximum, wenn die Ebene der Flachspule mit der Ebene der Wellenfront der akustischen Welle zusammenfällt. Es sind Mittel vorgesehen, um die Flachspule auf das Maximum dieser Amplitude einzustellen, also nach der Schallquelle auszurichten.

Bei dieser Anordnung geht es nicht um eine Messung eines Linienintegrals. Wie groß das Signal bei fehlausgerichteter Flachspule absolut ist, interessiert dort nicht. Es wird lediglich auf ein Maximum dieses Signals eingestellt. Auch werden Störeinflüsse wie Temperaturänderungen nicht berücksichtigt.

Die DE-A-3 205 798 zeigt einen faseroptischen Phasenmodulator mit einer Lichtleitfaser, die auf einen rohrförmigen, piezokeramischen Körper aufgewickelt ist. Durch Anlegen einer elektrischen Spannung an den piezokeramischen Körper wird dieser verformt und dementsprechend die mechanische Spannung in der Lichtleitfaser verändert. Dabei tritt üblicherweise außer einer Phasenmodulation auch eine Polarisationsmodulation auf. Nach der Lehre der DE-A-3 205 798 wird durch Torsion der Lichtleitfaser in dem Phasenmodulator kein Polarisationszustand des durchlaufenden Lichtes bevorzugt. Ein solcher Phasenmodulator ist auch als Drucksensor anwendbar.

Die DE-A-2 936 875 zeigt ein optisches Dehnungsmeßgerät bei welcher zwei Lichtleitfasern an verschiedenen Teilen eines zu vermessenden Gegenstandes angebracht sind. Bei einer Verformung des Gegenstandes werden die Lichtleitfasern unterschiedlich gedehnt.

Die EP-A-0 038 401 zeigt ein ähnliches Verfahren zur Überwachung von physikalischen Zustandsänderungen von hochbelasteten Bauteilen. Dabei werden in die zu überwachenden Zonen der Bauteile Lichtleitfasern eingelagert und die optischen Eigenschaften der Lichtleitfasern beobachtet. Das sind praktisch auch optische Dehnungsmeßgeräte.

Die EP-A-0 021 199 zeigt eine Anordnung mit zwei Lichtleitfasern, bei welcher das Licht in einer der Lichtleitfasern durch eine physikalische Grösse moduliert wird, beispielsweise eine Spannung, die an einem Kristall zur Änderung der Polarisationsrichtung des Lichtes anliegt. Es ist weiterhin bekannt, bei Turbinentriebwerken Drücke und Temperaturen an verschiedenen einzelnen Punkten durch Meßsonden zu messen. Ebenso ist es bekannt, Druck in einzelnen Punkten der Tragflächen eines Flugzeugs zu messen.

## Offenbarung der Erfindung

Der Erfindung liegt die Aufgabe zugrunde, eine Vorrichtung zur Messung des Linienintegrals einer örtlich veränderlichen Messgrösse längs eines vorgegebenen Messweges zu schaffen.

Der Erfindung liegt die speziellere Aufgabe zugrunde, eine solche Vorrichtung mit Hilfe von Lichtleitfasern zu realisieren.

Erfindungsgemäss wird die Aufgabe gelöst durch

(a) eine erste Lichtleitfaser, die längs dieses Messweges verlegt ist und aus einem Material mit einer optischen Eigenschaft besteht, welche an jeder Stelle längs des vorgegebenen Messweges von dieser ersten Messgrösse wenigstens näherungsweise als lineare Funktion der Messgrösse mit einem ersten Koeffizienten beeinflusst ist und welche ausserdem von einer zweiten, störenden Messgrösse beeinflusst ist,

(b) Mittel zum Hindurchleiten von Licht durch die erste Lichtleitfaser als erstes Messlichtbündel

(c) Kompensationsmittel mit einer zweiten, längs des Messweges verlegten Lichtleitfaser, bei welcher die besagte optische Eigenschaft durch die erste Messgrösse nach einer wenigstens näherungsweise linearen Funktion mit einem von dem ersten Koeffizienten verschiedenen zweiten Koeffizienten und ausserdem durch die zweite, störende Messgrösse beeinflusst sind und

(d) Mittel zum Hindurchleiten von Licht durch die zweite Lichtleitfaser als zweites Messlichtbündel,

(e) eine Detektoranordnung mit Mitteln, welche auf eine dritte Messgrösse des ersten und des zweiten Messlichtbündels ansprechen, die eine Funktion des Wegintegrals der Werte der besagten optischen Eigenschaft längs des vorgegebenen Messweges ist, längs welcher die Lichtleitfasern verlegt sind, und

(f) Mittel zur Erzeugung eines Signals, welches das Linienintegral der ersten Messgrösse längs des Messweges, kompensiert hinsichtlich des Einflusses der zweiten Messgrösse darstellt, aus den dritten Messgrössen des ersten und des zweiten Messlichtbündels.

Es kann auf diese Weise z.B. ein Mittelwert der Messgrösse über einen Messweg oder - bei z.B. mäanderförmiger Führung des Messweges - über eine Fläche gebildet werden. Wenn bei einer Druckmessung der Messweg mäanderförmig oder sonstwie gleichmässig über eine Fläche verteilt geführt wird, dann wird die Integration ein Mass für die durch den Druck auf die Fläche ausgeübte Kraft erhalten.

Ausgestaltungen der Erfindung sind Gegenstand der abhängigen Anspruche.

Die Erfindung ist nachstehend an einigen Ausführungsbeispielen unter Bezugnahme auf die zugehörigen Zeichnungen näher erläutert:

## Kurze Beschreibung der Zeichnungen

Fig. 1     zeigt schematisch-perspektivisch die Anwendung der Vorrichtung zur Bildung eines Druckmittelwertes bei einem Turbinentriebwerk.

Fig. 2     zeigt einen Schnitt durch eine Tragfläche eines Flugzeugs, auf welche druckempfindliche

3

Lichtleitfasern in einem Mäandermuster zur Messung des Auftriebs auf der Ober- und Unterseite aufgebracht sind.

Fig. 3    ist eine Draufsicht auf die Tragfläche von Fig. 2.

Fig. 4    veranschaulicht die Unterdrückung einer störenden Messgrösse.

## Bevorzugte Ausführungen der Erfindung

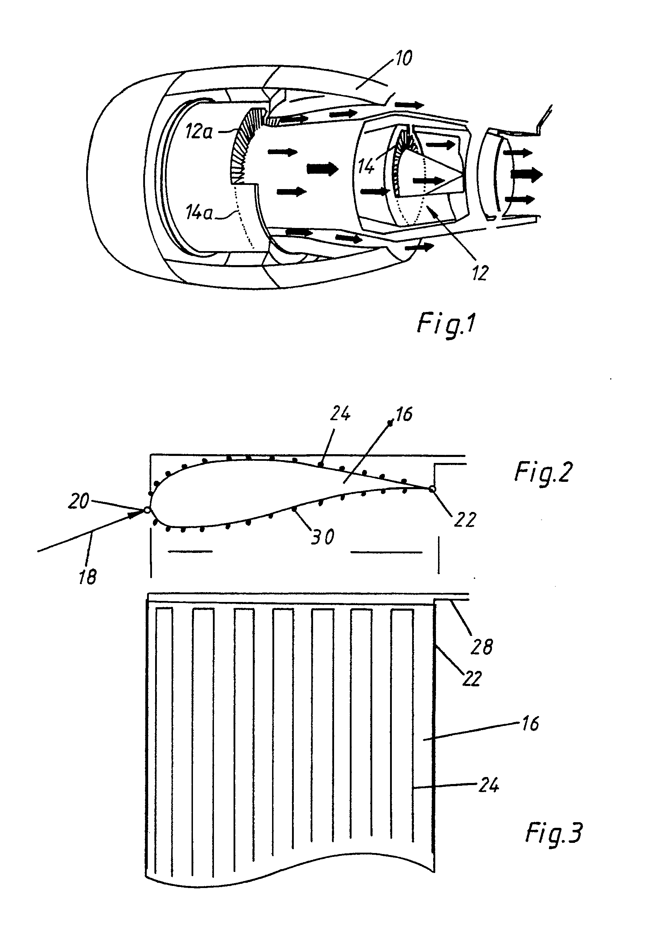

In Fig. 1 ist perspektivisch ein Turbinentriebwerk 10 dargestellt, dessen Funktion bekannt und daher hier nicht im einzelnen erläutert ist. Es soll bei einem solchen Turbinentriebwerk der Druck gemessen werden, der in einer bestimmten Radialebene 12, 12a herrscht. Der Druck kann aber längs des Umfangs der Turbine etwas unterschiedlich sein, so dass eine Druckmessung an einer bestimmten Stelle des Umfangs u.U. einen gestörten Messwert liefert. Aus diesem Grunde ist eine ummantelte Lichtleitfaser 14, 14a längs eines im wesentlichen geschlossenen Messweges um den Gasstrom des Turbinentriebswerks herum in der Radialebene 12, 12a angeordnet. Es wird auf diese Weise ein Mittelwert des Drucks in der Radialebene 12, 12a gemessen.

In ähnlicher Weise kann mittels eines ummantelten Lichtleiters, der längs eines solchen geschlossenen Messweges angeordnet ist, ein Mittelwert der Temperatur in einer Radialebene gebildet werden.

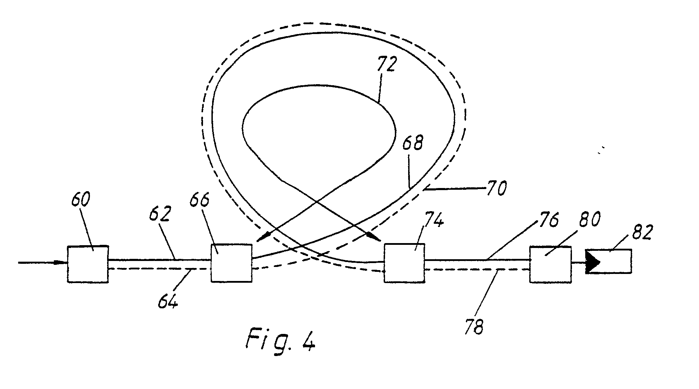

Eine andere Anwendung ist in Fig. 2 und 3 dargestellt. Es ist dort eine Tragfläche eines Flugzeugs mit 16 bezeichnet, deren Profil aus Fig. 2 ersichtlich ist. Die Tragfläche 16 wird in Richtung des Pfeiles 18 angeströmt. Es ergibt sich dann auf der Oberseite der Tragfläche 16 von einem Staupunkt 20 bis zur Hinterkante 22 des Tragflächenprofils eine bestimmte Druckverteilung mit einem Unterdruck und auf der Unterseite eine andere Druckverteilung. Aus dem Integral der Druckverteilung über die Fläche der Tragfläche ergibt sich der Auftrieb. Dieses Flächenintegral der Druckverteilung wird auf der Oberseite der Tragfläche 16 durch eine ummantelte Lichtleitfaser 24 gemessen, die, wie aus Fig. 3 ersichtlich ist, längs eines mäanderförmigen Messweges auf der Oberseite der Tragfläche 16 angebracht ist. Die Lichtleitfaser 24 ist damit gleichmässig über die Oberseite der Tragfläche 16 verteilt. Eine Detektoranordnung, mit welcher die Lichtleitfaser 24 über weitere Lichtleitfasern 26, 28 verbunden ist, spricht integrierend auf die längs der Lichtleitfaser 24 auftretenden Werte der durch den Druck beeinflussten optischen Eigenschaft an. Es wird so ein Messwert gewonnen, der praktisch dem Flächenintegral des Druckes über die Oberseite der Tragfläche 16 entspricht. In entsprechender Weise wird mittels einer Lichtleitfaser 30 ein Flächenintegral des Druckes über die Unterseite der Tragfläche 16 gemessen. Die Differenz dieser beiden Messwerte liefert den Auftrieb.

Beispiele solcher Schaltungen sind z.B. beschrieben in den Dokumenten Voges et al.: "Optical Phase and Amplitude Measurement by Single Sideband Homodyne Detection" in IEEE Journal QE-18 Seiten 124 ff und D. Eberhard und E. Voges "Fiber Gyroscope with Phase-Modulated Sindgle Sideband Detection" in "Optics Letters" Bd 9 No 1 Seiten 22 ff.

Es wird nachstehend die Wirkungsweise der Vorrichtung nach dem Beispiel der Phasenmodulation erläutert. Es ist zu beachten, dass die Phasenverschiebung, welche das Licht in einem Abschnitt der Lichtleitfaser erfährt, nicht nur von der zu erfassenen Messgrösse, z.B. dem Druck, sondern auch von anderen physikalischen Messgrössen, z.B. der Temperatur, abhängt. Die letzteren physikalischen Messgrössen werden hier als störende Messgrössen bezeichnet.

In manchen Fällen kann aber nicht erreicht werden, dass eine Lichtleitfaser nur für eine einzige physikalische Messgrösse empfindlich ist. Es kann beispielsweise manchmal bei einer Druckmessung die Temperaturabhängigkeit der Brechzahl nicht vernachlässigt werden.

Fig. 4 zeigt eine Anordnung, durch welche auch in einem solchen Fall ein Linienintegral nur einer ersten Messgrösse unbeeinflusst von einer zweiten, störenden Messgrösse erhalten werden kann.

Licht von einer Lichtquelle, z.B. einem Laser, wird über einen Koppler 60 auf zwei Lichtleitfasern 62 und 64 geleitet. Die Lichtleitfasern 62 und 64 dienen nur der Signalübertragung und sind so ausgeführt, dass sie von den Messgrössen möglichst wenig beeinflusst werden. Über einen Koppler 66 sind die Lichtleitfasern 62 und 64 mit Lichtleitfasern 68 bzw. 70 verbunden. Durch eine erste Messgrösse und eine zweite Messgrösse wird eine optische Eigenschaft der Lichtleitfasern 68 und 70 verändert. In dem beschriebenen Beispiel ist die erste Messgrösse der Druck p, die zweite Messgrösse die Temperatur T. Als "optische Eigenschaft" wird der Brechungsindex n der Lichtleitfasern 68 und 70 lokal verändert. Als eine das Linienintegral darstellende dritte Messgrösse dient die Phase des durch die Lichtleitfasern 68 bzw. 70 geführten Lichtes. Die Lichtleitfasern 68 und 70 sind mit einer Ummantelung versehen, so dass sie besonders for die erste Messgrösse. z.B. den Druck, empfindlich sind., Der Druck stellt somit die erste Messgrösse dar. Die Empfindlichkeit für eine zweite Messgrösse, z.B. die Temperatur, lässt sich aber nicht unterdrücken. Die Temperatur stellt somit eine störende Messgrösse dar. Die beiden Lichtleitfasern 68 und 70 sind dicht nebeneinander längs eines Messweges 72 verlegt, so dass sie gleichen Druck- und Temperaturverhältnissen ausgesetzt sind. Über einen Koppler 74 sind die Lichtleitfasern 69 und 70 dann wieder mit Lichtleitfasern 76 bzw. 78 verbunden, die nur der Signalübertragung dienen. Die Lichtleitfasern 76 und 78 sind über einen Koppler 80 mit einer Detektoranordnung 82 verbunden.

Die beiden Lichtleitfasern 68 und 70 sind so ausgebildet, dass sie unterschiedliche Empfindlichkeiten für die erste und zweite Messgrösse besitzen.

Die beschriebene Anordnung arbeitet wie folgt:

Die erste Messgrösse sei der Druck p, zweite störende Messgrösse sei die Temperatur T. Gemäss Gleichung (2) gilt dann für die Lichtleitfaser 68

$$(1) \qquad n_{68}(P_o + \Delta p, T_o + \Delta T) = n_{68}(p_o, T_o) + n_{68p}(p_o, T_o)(\pm \Delta p) + n_{68T}(p_o, T_o)(\pm \Delta T) + ..$$

$$(2) \qquad n_{70}(p_o + \Delta p, T_o + \Delta T) = n_{70}(p_o, T_o) = n_{70p}(p_o, T_o)(\pm \Delta p) + n_{70}(p_o, T_o)(\pm \Delta T) + ..$$

Dabei sind $n_{68}$ und $n_{70}$ die in einem bestimmten Punkt der Lichtleitfasern erhaltenen Brechzahlen. Der Index p oder T bedeutet die partielle Differentiation nach der betreffenden Größe im Arbeitspunkt $p_o$, $T_o$.

Durch geeignete Wahl der Ummantelung kann dafür gesorgt werden, daß bei unterschiedlicher Empfindlichkeit der beiden Lichtleitfasern 68 und 70 für die erste Meßgröße, d.h. den Druck p, die Empfindlichkeiten für die zweite, störende Meßgröße, also die Temperatur T, gleich sind.

Es ist also

$$n_{68,T} = n_{70,T} \, ,$$

während z.B.

$$n_{70,p} \gg n_{68,p}$$

ist. Für ein infinitesimal kleines Faserstück dl auf dem Meßweg L ist die Phasenverschiebung des Lichts zwischen Anfang und Ende des Faserstücks

$$d \phi = n(X) \cdot k_o \cdot dl \qquad (3).$$

Die Differenz der auf integrierten Phasenänderungen, also die Differenz der "dritten Meßgrößen", ist dann

$$\phi_1 - \phi_2 = \int_o^L d\phi_1 - \int_o^L d\phi_2 =$$

$$= k_o \left\{ \int_o^L [n_{70}(p_o, T_o) - n_{68}(p_o, T_o)] \, dl - \right. \qquad (4)$$

$$\left. + [n_{70,p}(p_o, T_o) - n_{68,p}(p_o, T_o)] \int_o^L (\pm \Delta p) \, dl \right. .$$

In der Differenz verschwindet der Einfluß der störenden Meßgröße T in erster Näherung. Das Linienintegral über die erste Meßgröße p wird gewichtet mit der Differenz $\Delta n_p$ der Empfindlichkeiten für diese Größe zwischen den beiden Lichtleitfasern 68 und 70. Die Phasendifferenzbildung erfolgt in einer Mach-Zehnder-Überlagerung der Lichtsignale aus den beiden Lichtleitfasern 60 und 70.

Statt der Phase können auch andere Meßgrößen des durch die Lichtleitfaser geleiteten Lichts durch die Änderung der optischen Eigenschaften der Lichtleitfasern moduliert werden, beispielsweise Intensität, Polarisation oder Spektrum des Lichts.

Die ausgenutzte von der Meßgröße abhängige optische Eigenschaft der Lichtleitfaser kann auch die optische Doppelbrechung sein, durch welche der Polarisationszustand des durch die Lichtleitfaser geleiteten Lichts verändert wird.

## Patentansprüche

1. Optische Faseranordnung zur Messung des Linienintegrals einer räumlich veränderlichen ersten Messgrösse längs eines vorgegebenen Messweges (72), bei welcher sich der Messweg (72) über einen Bereich erstreckt, in welchem Änderungen der ersten Messgrösse zu erwarten sind, enthaltend

(a) eine erste Lichtleitfaser (68), die längs dieses Messweges (72) verlegt ist und aus einem Material mit einer optischen Eigenschaft (n) besteht, welche an jeder Stelle längs des vorgegebenen Messweges (72) von dieser ersten Messgrösse wenigstens näherungsweise als lineare Funktion der Messgrösse (p) mit einem ersten Koeffizienten ($n_{68p}$) beeinflusst ist und welche ausserdem von einer zweiten, störenden Messgrösse (t) beeinflusst ist,

(b) Mittel zum Hindurchleiten von Licht durch die erste Lichtleitfaser (68) als erstes Messlichtbündel,

(c) Kompensationsmittel mit einer zweiten, längs des Messweges (72) verlegten Lichtleitfaser (70), bei welcher die besagte optische Eigenschaft (n) durch die erste Messgrösse (p) nach einer wenigstens näherungsweise linearen Funktion mit einem von dem ersten Koeffizienten verschiedenen zweiten Koeffizienten ($n_{70p}$) und ausserdem durch die zweite, störende Messgrösse (t) beeinflusst sind und

(d) Mittel zum Hindurchleiten von Licht durch die zweite Lichtleitfaser als zweites Messlichtbündel,

(e) eine Detektoranordnung (82) mit Mitteln, welche auf eine dritte Messgrösse ($\phi$) des ersten und des zweiten Messlichtbündels ansprechen, die eine Funktion des Wegintegrals der Werte der besagten optischen Eigenschaft längs des vorgegebenen Messweges (72) ist, längs welcher die Lichtleitfasern (68, 70) verlegt sind, und

(f) Mittel zur Erzeugung eines Signals, welches das Linienintegral (Gleichung 4) der ersten Messgrösse (p) längs des Messweges (72), kompensiert hinsichtlich des Einflusses der zweiten Messgrösse (T) darstellt, aus den dritten Messgrössen ($\phi$) des ersten und des zweiten Messlichtbündels.

2. Optische Faseranordnung nach Anspruch 1, **dadurch gekennzeichnet, dass** die erste Messgrösse der Druck und die störende, zweite Messgrösse die Temperatur ist.

3. Optische Faseranordnung nach Anspruch 1, **dadurch gekennzeichnet, dass** die erste Messgrösse die Temperatur und die störende zweite Messgrösse der Druck ist.

4. Optische Faseranordnung nach einem der Ansprüche 1 bis 3, **dadurch gekennzeichnet, dass** die beeinflusste optische Eigenschaft der Brechungsindex (n) ist.

5. Optische Faseranordnung nach einem der Ansporüche 1 bis 4, **dadurch gekennzeichnet, dass** die dritte Messgrösse die Phase ($\phi$) des aus den Lichtleitfasern (68, 70) austretenden Lichtes ist.

6. Optische Faseranordnung nach einem der Ansprüche 1 bis 5, **dadurch gekennzeichnet, dass**

(a) die besagte optische Eigenschaft in der ersten und in der zweiten Lichtleitfaser (68,79) durch die zweite, störende Messgrösse (t) im wesentlichen in gleicher Weise beeinflusst wird und

(b) als Signal zur Darstellung des Linienintegrals die Differenz ($\phi_1 - \phi_2$) der mit der ersten und der zweiten Lichtleitfaser (68, 70) erhaltenen Werte der dritten Messgrösse ($\phi$) erzeugbar ist.

7. Optische Faseranordnung nach Anspruch 3, **dadurch gekennzeichnet, dass** der Messweg (14) im wesentlichen geschlossen in einer Radialebene in einem Turbinentriebwerk (10) verläuft.

8. Optische Faseranordnung nach Anspruch 2, **dadurch gekennzeichnet, dass**

(a) je eine Lichtleitfaser-Anordnung (24, 30) mäanderförmig auf der Oberseite und auf der Unterseite einer Tragfläche (16) eines Flugzeugs verlegt ist und

(b) Signalverarbeitungsmittel vorgesehen sind, die aus den Signalen der beiden Lichtleitfaser-Anordnungen (24, 30) ein den Auftrieb wiedergebendes Signal liefern.

## Claims

EP 0 163 022 B1

1. Optical fibre arrangement for measuring the line integral of a first measuring quantity variable in space along a predetermined measuring path (72) in which the measuring path (72) extends over an area in which variations of the first measuring quantity are expected, comprising

   (a) a first light piping fibre (68) which is placed along this measuring path (72) and consists of a material having an optical characteristic (n) which, at each location along the predetermined measuring path (72), is affected by this first measuring quantity at least approximately as linear function of the measuring quantity (p) with a first coefficient ($n_{68p}$) and which is further affected by a second disturbing measuring quantity (t),

   (b) means for passing light through the first light piping fibre (68) as first measuring light beam,

   (c) compensating means having a second light piping fibre (70) which is placed along the measuring path (72) and in which said optical characteristic (n) is affected by the first measuring quantity (p) according to an at least approximately linear function with a second coefficient ($n_{70p}$) which is different from the first coefficient, and further affected by the second disturbing measuring quantity (t), and

   (d) means for passing light through the second light piping fibre as second measuring light beam,

   (e) a detector arrangement (82) having means which respond to a third measuring quantity ($\phi$) of the first and the second measuring light beam, which third measuring quantity ($\phi$) is a function of the path integral of the values of said optical characteristic along the predetermined measuring path (72) along which the light piping fibres (68, 70) are placed, and

   (f) means for generating, from the third measuring quantities ($\phi$) of the first and the second measuring light beam, a signal which, in a way compensated with respect to the influence of the second measuring quantity (T), represents the line integral (equation 4) of the first measuring quantity (p) along the measuring path (72).

2. Optical fibre arrangement as set forth in claim 1, **characterized in that** the first measuring quantity is the pressure and the disturbing second measuring quantity is the temperature.

3. Optical fibre arrangement as set forth in claim 1, **characterized in that** the first measuring quantity is the temperature and the disturbing second measuring quantity is the pressure.

4. Optical fibre arrangement as set forth in any one of the claims 1 to 3, **characterized in that** the affected optical characteristic is the index of refraction (n).

5. Optical fibre arrangement as set forth in any one of the claims 1 to 3, **characterized in that** the third measuring quantity is the phase ($\phi$) of the light leaving the light piping fibres (68, 70).

6. Optical fibre arrangement as set forth in any one of the claims 1 to 5, **characterized in that**

   (a) said optical characteristic is affected substantially in the same manner by the second disturbing measuring quantity (t) in the first and the second light piping fibres (68, 70), and

   (b) the difference ($\phi_1 - \phi_2$) of the values of the third measuring quantity ($\phi$) obtained by means of the first and the second light piping fibres (68, 70) is generated as signal for representing the line integral.

7. Optical fibre arrangement as set forth in claim 3, **characterized in that** the measuring path (14) extends substantially closedly in a radial plane in a turbine engine (10).

8. Optical fibre arrangement as set forth in claim 2, **characterized in that**

   (a) one respective light piping fibre arrangement (24, 30) is placed in a meander-pattern on the upper side and on the underside of a wing (16) of an aircraft, and

   (b) signal processing means are provided which, from the signals of the two light piping arrangements (24, 30), provide a signal representing the lift.

**Revendications**

1. Disposition de fibres optiques destinée à mesurer l'intégrale de ligne d'une première grandeur de mesure variable en espace le long d'une voie de mesure prédéterminée (72), dans laquelle la voie de mesure (72) s'étend sur un domaine dans lequel des variations de la première grandeur de mesure

7

sont attendues, comprenant

(a) une première fibre conductrice de lumière (68) posée le long de cette voie de mesure (72) et constituée d'une matière ayant une propriété optique (n) qui est influencée à chaque endroit le long de la voie de mesure prédéterminée (72) par cette première grandeur de mesure, au moins approximativement, comme fonction linéaire de la grandeur de mesure (p) avec un premier coéfficient ($n_{68p}$), et qui, en outre, est influencée par une seconde grandeur de mesure perturbante (t),

(b) des moyens destinés à guider de la lumière par la première fibre conductrice de lumière (68) comme premier faisceau lumineux de mesure,

(c) des moyens de compensation ayant une seconde fibre conductrice de lumière (70) posée le long de la voie de mesure (72), dans laquelle ladite propriété optique (n) est influencée par la première grandeur de mesure (p) selon une fonction au moins approximativement linéaire avec un second coéfficient ($n_{70p}$) différent du premier coéfficient et, en outre, par la second grandeur de mesure perturbante (t), et

(d) des moyens destinés à guider de la lumière par la seconde fibre conductrice de lumière comme second faisceau lumineux,

(e) une disposition de détecteurs (82) ayant des moyens répondant à une troisième grandeur de mesure ($\phi$) du premier et du second faisceau lumineux, qui est une fonction de l'intégrale du chemin des valeurs de ladite propriété optique le long d'une voie de mesure prédéterminée (72) le long de laquelle sont posées les fibres conducteur de lumière (68, 70), et

(f) des moyens destinés à engendrer un signal représentant l'intégrale de ligne (équation 4) de la première grandeur de mesure (p) le long de la voie de mesure (72), compensé à l'égard de l'influence de la seconde grandeur de mesure (t), à partir des troisième grandeurs de mesure ($\phi$) du premier et du second faisceau lumineux.

2.  Disposition de fibres optiques selon la revendication 1, **carctérisée par le fait que** la première grandeur de mesure est la pression et la seconde grandeur de mesure perturbante est la température.

3.  Disposition de fibres optiques selon la revendication 1, **caractérisée par le fait que** la première grandeur de mesure est la température et la seconde grandeur de mesure perturbante est la pression.

4.  Disposition de fibres optiques selon l'une des revendications 1 à 3, **caractérisée par le fait que** la propriété optique influencée est l'indice de réfraction (n).

5.  Disposition de fibres optiques selon l'une des revendications 1 à 4, **caractérisée par le fait que** la troisième grandeur de mesure est la phase ($\phi$) de la lumière sortant des fibres conductrices de lumière (68, 70).

6.  Disposition de fibres optiques selon l'une des revendications 1 à 5, **caractérisée par le fait que**

(a) la dite propriété optique dans la première et la seconde fibre conductrice de lumière (68, 79) est influencée par la seconde grandeur de mesure perturbante (t) essentiellement de la même manière, et

(b) comme signal pour la représentation de l'intégrale de ligne, la différence ( $\phi_1$ - $\phi_2$ ) des valeurs de la troisième grandeur de mesure ( ) obtenues avec le premier et la seconde fibre conductrice de lumière (68, 70) peut être produite.

7.  Disposition de fibres optiques selon la revendication 3, **caractérisée par le fait que** la voie de mesure (14) s'étend de manière essentiellement fermée dans le plan radial dans un appareil moteur de turbine (10).

8.  Disposition de fibres optiques selon la revendication 2, **caractérisée par le fait que**

(a) une disposition de fibres conductrices de lumière à la fois (24, 30) est posée en forme de méandre sur le côté supérieur et inférieur d'une aile (16) d'un avion, et

(b) des moyens de traitement de signal sont prévus, qui fournissent à partir des signaux des deux dispositions de fibres conductrices de lumière (24, 30) un signal représentant la sustentation.

Fig.1

Fig.2

Fig.3

Fig. 4